**Europäisches Patentamt**

(19) **European Patent Office**

**Office européen des brevets**

(11) Veröffentlichungsnummer: **0 034 305**
**B1**

(12) # EUROPÄISCHE PATENTSCHRIFT

(45) Veröffentlichungstag der Patentschrift:
**19.10.83**

(21) Anmeldenummer: **81100796.2**

(22) Anmeldetag: **05.02.81**

(51) Int. Cl.³: **C 10 C 1/00, B 01 D 37/02**

(54) **Verfahren zur Aufbereitung und Rückführung von Filtrationsrückständen.**

(30) Priorität: **13.02.80 DE 3005246**

(43) Veröffentlichungstag der Anmeldung:
**26.08.81 Patentblatt 81/34**

(45) Bekanntmachung des Hinweises auf die Patenterteilung:
**19.10.83 Patentblatt 83/42**

(84) Benannte Vertragsstaaten:
**BE FR GB IT LU NL**

(56) Entgegenhaltungen:
**DE-C-889 048**
**FR-A-2 268 857**
**GB-A-1 324 572**
**GB-A-2 035 365**
**US-A-4 046 690**

(73) Patentinhaber: **Bergwerksverband GmbH,**
**Franz-Fischer-Weg 61, D-4300 Essen 13 (DE)**

(72) Erfinder: **Romey, Ingo, Dr. Dipl.-Ing., Sandkamp 25,**
**D-4224 Hünxe 2 (DE)**
Erfinder: **Pass, Reinhard, Dipl.-Ing.-Chem.,**
**Walpurgisstrasse 44, D-4300 Essen 1 (DE)**

EP 0 034 305 B1

**0 034 305**

## Verfahren zur Aufbereitung und Rückführung von Filtrationsrückständen

Die Erfindung betrifft ein Verfahren gemäß Oberbegriff des Hauptanspruches.

Bei der Filtration von Teeren, Pechen sowie Kohleextrakten bzw. Kohleölen wird zur Verbesserung der Filtrierbarkeit ein Filterhilfsmittel verwendet, daß als Anschwemmschicht auf das eigentliche Filter aufgebracht und/oder der zu filtrierenden Substanz kontinuierlich zudosiert wird. Bei der Filtration bildet sich auf dem Filter ein Filterkuchen aus (Filtrationsrückstand). Dieser besteht im wesentlichen aus dem Filterhilfsmittel, den abfiltrierten Stoffen sowie dem diesen Bestandteilen anhaftenden Restfiltrat. Der Filterkuchen wird von Zeit zu Zeit von dem eigentlichen Filter entfernt. Davor oder danach ist es üblich ihn mit einem Inertgas z. B. $N_2$ oder Heißdampf in einem gewissen Umfang zu trocknen. Dadurch wird der Anteil des dem Kuchen anhaftenden Restfiltrats erniedrigt und der abgetriebene Teil zurückgewonnen.

Als Filterhilfsmittel sind z. B. Blähtone und Kieselgur bekannt. Diese bilden aufgrund ihrer Struktur einen lockeren Filterkuchen, der hohe Durchflußleistungen und eine hohe Reinheit des Filtrates garantiert. Üblicherweise wird dabei so viel Filterhilfsmittel verwendet, wie Rückstände abzufiltrieren sind. Weiterhin sind als Filterhilfsmittel sogenannte Bläh- oder Kugelkokse, die, mit ähnlich guten Eigenschaften wie die Blähtone oder das Kieselgur versehen, hauptsächlich für die Filtration von alkalischen Medien eingesetzt werden. Diese Bläh- oder Kugelkokse werden durch plötzliches Erhitzen von feingemahlenen bituminösen Produkten gebildet. Dabei durchläuft das Material während einer thermischen Behandlung eine Erweichungszone und die gleichzeitig einsetzende Gasentwicklung bläht die einzelnen Körner zu einem dünnschaligen Produkt auf.

Problematisch bei der Filtration von Teeren, Pechen sowie Kohleextrakten bzw. Kohleölen ist die Tatsache, daß einerseits erhebliche Mengen an Filterhilfsmitteln bereitgestellt werden müssen, welche üblicherweise nicht zurückgewonnen werden können und darüber hinaus die Weiterverwendung des Filterkuchens überaus problematisch ist.

Es ist zwar schon vorgeschlagen worden, die Filtrationsrückstände einfach zu vergasen oder zu verbrennen, doch wird dadurch immer noch nicht das Problem der Bereitstellung ausreichender Menge an Filterhilfsmittel gelöst.

Es ist demnach die Aufgabe der Erfindung, bei der Filtration von Teeren, Pechen sowie Kohleextrakten bzw. Kohleölen mit Filterhilfsmitteln den Filtrationsrückstand aufzubereiten und in den Filtrationsprozeß wieder zurückzuführen. Dabei soll ein in diesem Prozeß wiederverwendbares Filterhilfsmittel erzeugt werden, so daß ein Kreisprozeß entsteht, der den Neubedarf an Filterhilsmittel auf ein Minimum reduziert. Eine weitere Aufgabe besteht in einer umweltfreundlichen und energiesparenden Weiterverarbeitung des bei der Filtration anfallenden Rückstandes.

Diese Aufgabe wird bei einem Verfahren der eingangs genannten Art erfindungsgemäß durch die kennzeichnenden Merkmale des Anspruches 1 gelöst.

Als Inertgas kann wie erwähnt z. B. $N_2$ oder Heißdampf verwendet werden, wobei Heißdampf wegen seiner extraktiven Wirkung auf die leicht flüchtigen Bestandteile des Filterkuchens bevorzugt wird. Dadurch entsteht ein im kalten Zustand relativ harter Filterkuchen mit einem Restanteil an bituminösen Stoffen von in der Regel kleiner als 30%. — Auf jeden Fall soll der Filtrationsrückstand durch das Durchspülen mit Inertgas zumindest bei Raumtemperatur einen Feststoffanteil größer als 40%, vorzugsweise größer als 50% aufweisen. Ein solcher Filtrationsrückstand erweicht in der Wärme und kann durch Extrudieren und Granulieren zu kleinen Partikeln verarbeitet werden; dies ist besonders für Filtrationsrückstände von Kohleextrakten bzw. Kohleölen geeignet. — Bei einem Filtrationsrückstand aus der Teer- und/oder Pechfiltration reicht in der Regel eine geringe Menge an kaltem Inertgas, da durch Abkühlung sehr leicht ein harter spröder Filtrationsrückstand entsteht, der vorzugsweise aufgemahlen werden kann.

Der Trocknungsvorgang (Durchspülung) mit Inertgas erfolgt also im wesentlichen in an sich bekannter Weise, wobei es jedoch darauf ankommt, daß der getrocknete Filtrationsrückstand zu einem Stückgut zerkleinerbar ist — er darf also nicht mehr breiig oder klebrig sein, wie er üblicherweise nach dem Stande der Technik belassen wird.

Bei der Zerkleinerung des trocken geblasenen Filtrationsrückstandes z. B. durch Mahlung oder Granulierung wird in der Regel ein Spektrum verschiedener Korngrößen entstehen. Für die Erfindung kommt es lediglich darauf an, daß der wesentliche Teil der Körnung eine Größe von etwa 0,5 mm aufweist, wobei sich die Grenzen des Körnungsbereiches in dem technisch üblichen Rahmen bewegen dürfen; üblicherweise werden mengenmäßig mehr kleinere als größere Körner erhalten.

Der so zerkleinerte Filtrationsrückstand wird dann auf an sich bekannte Weise in einer Wirbelschicht schockverkokt. Es hat sich gezeigt, daß für die Rückführbarkeit des aufbereiteten Filtrationsrückstandes in dem Filtrationsprozeß als Filterhilfsmittel die Aufheizgeschwindigkeit in der Wirbelschicht mindestens 1000°C/min betragen muß, wobei die bei dieser Behandlung erzielten Endtemperaturen der Partikel zwischen 500 und 1200°C liegen soll. Die Endtemperatur hängt von der Temperatur ab, bei der der angeheizte Filtrationsrückstand wieder zu einem Koksgerüst erhärtet. Unterhalb 500°C wird dies in aller Regel aber nicht erreicht. Höhere Temperaturen als 1200°C bringen keine weiteren Vorteile mehr und sind technisch eher problematisch.

2

# 0 034 305

An die Wirbelschicht werden lediglich die technisch üblichen Anforderungen gestellt. Bei einer solchen Behandlung erweichen die bitumenartigen Anteile des Filtrationsrückstandes und bedingen durch die hohe Gasentwicklung einen Bläheffekt, so daß sogenannte Blähkokse verschiedener Körnung entstehen. Diese Blähkokse besitzen überraschenderweise die für ein Filterhilfsmittel bei der Filtration von Teeren, Pechen sowie Kohleextrakten bzw. Kohleölen geförderte Struktur. Es hat sich aber herausgestellt, daß als weiterer Verfahrensschritt das Ausselektieren einer Kornfraktion im wesentlichen 0,05 bis 0,3 mm aus den genannten Blähkoksen zu erfolgen hat. Nur so ist es möglich Teere, Peche sowie Kohleextrakte bzw. Kohleöle mit den aufgearbeiteten und zurückgeführten Filtrationsrückständen als Filterhilfsmittel erfolgreich zu filtrieren. Natürlich ist auch bei der erfindungsgemäßen Kornfraktion ein Kornspektrum der üblichen Art, also auch gewisse Mengen an kleineren und größeren Körnern zulässig. Die Abtrennung dieser Kornfraktion kann z. B. mit einem dem Wirbelbett nachgeschalteten Zyklon erfolgen. Es ist auch möglich am Fuße des für die thermische Behandlung verwendeten Wirbelschichtreaktors eine Grobkornfraktion von im wesentlichen größer als 0,3 mm auszutragen und am Kopf des Reaktors die kleineren Kornfraktionen abzuziehen und daraus die erfindungsgemäße Fraktion durch Windsichtung oder mit Hilfe eines Zyklon abzuschalten.

Die Rückführung der so gewonnenen Kornfraktion als Filterhilfsmittel in den erfindungsgemäßen Filtrationsprozeß erfolgt in der für die in Rede stehende Filtrationsprozesse üblichen Art und Menge.

Das erfindungsgemäße Verfahren ist weder auf bestimmte Provenienzen der Teere, Peche, Kohleextrakte oder Kohleöle noch auf besondere Filtrationsapparate bzw. Filter beschränkt. Die Aufbereitung und Rückführung der Filtrationsrückstände wird bei dem erfindungsgemäßen Verfahren besonders erfolgreich, wenn erfindungsgemäß die gröbere und die feinere Kornfraktion aus der thermischen Behandlungsstufe des Filtrationsrückstandes thermisch zersetzt wird, was z. B. durch Vergasen oder Verbrennen geschehen kann, wobei je nach chemischer Zusammensetzung der fraglichen Rückstandkörner entweder Prozeßwärme, z. B. für den thermischen Behandlungsschritt oder ein z. B. wasserstoffhaltiges Brauchgas erzeugt wird.

Es hat sich als besonders vorteilhaft erwiesen, wenn die beim Aufheizen der zerkleinerten Filtrationsrückstände in der Wirbelschicht freiwerdenden flüssigen und gasförmigen Produkte für eine Weiterverwendung, z. B. als sogenanntes Kreislauföl bei der Kohleverflüssigung, gewonnen, oder erfindungsgemäß ebenfalls thermisch zersetzt werden. Hierdurch wird weitere Prozeßwärme zur Verfügung gestellt; beispielsweise kann mit diesen Produkten ein heißes Brenngas für den Betrieb des Wirbelschichtreaktors erzeugt werden.

Das erfindungsgemäße Verfahren wird besonders flexibel, wenn gemäß einer weiteren Ausbildung der Erfindung, vor dem Aufheizen in der Wirbelschicht dem zerkleinerten Filtrationsrückstand 20 bis 45 Gew.-% einer Kohle mit einem Gehalt an flüchtigen Bestandteilen von mehr als 25%, bezogen auf wasser- und aschefreie Kohle=waf und etwa der gleichen Körnung wie es dem zerkleinerten Filtrationsrückstand entsprechend hinzugemischt wird. Dadurch können einerseits diejenigen Kornfraktionen, die in den Filtrationsprozeß nicht zurückgeführt werden, mengenmäßig ersetzt werden, so daß stets eine ausreichende Menge an Filterhilfsmittel zur Verfügung steht. Andererseits können durch dieses Vorgehen aber auch die nicht zurückgeführten Kornfraktionen mengenmäßig so vergrößert werden, daß sich deren Weiterverarbeitung, z. B. durch Vergasung oder Verbrennung, lohnt. Der gleiche Effekt wird in bezug auf die beim thermischen Behandlungsschritt freiwerdenden flüssigen und gasförmigen Produkte durch die vorgenannte erfindungsgemäße Maßnahme erzielt. — Es war überaus überraschend, daß durch eine solche Zumischung ein Filterhilfsmittel entsteht, das in seiner Leistung im wesentlichen dem direkt aus dem Filtrationsrückstand nach dem erfindungsgemäßen Verfahren gewonnenen Filterhilfsmittel entspricht. — An das für dieses Vorgehen notwendige verkokbare kohlenstoffhaltige Material brauchen erstaunlicherweise keine weitergehenden Anforderungen gestellt zu werden; so sind hierfür z. B. Kohlen verschiedener Provinienz, aber auch andere verkokbare kohlenstoffhaltige Materialien, die die gestellten Anforderungen erfüllen, einsetzbar.

Die bei dem erfindungsgemäßen Verfahren erzielbaren Vorteile bestehen insbesondere darin, eine Verwendung für den bei einer technischen Anwendung in großen Mengen anfallenden Filterkuchens zu haben sowie die Verfügbarkeit eines für die Filtration von Teeren, Pechen sowie Kohleextrakten bzw. Kohleölen notwendigen Filterhilfsmittel zu garantieren. Weiterhin werden dabei weitere Anteile des bei der Filtration zu gewinnenden Stoffes zurückgewonnen.

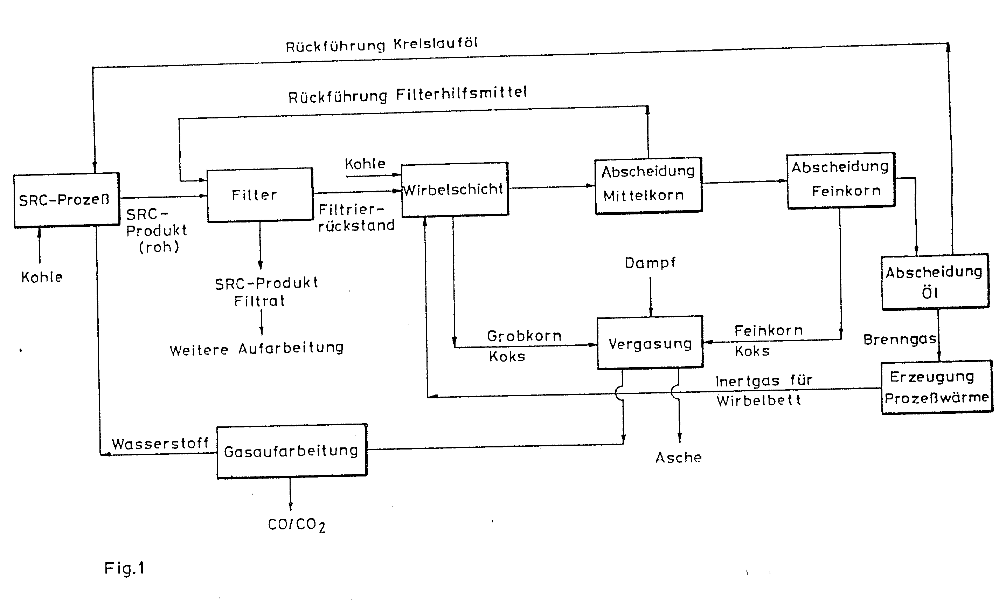

Die einzelnen Verfahrensschritte werden anhand der beigefügten Figur in einem beispielhaften Fließbild verdeutlicht:

Die zu filtrierende Substanz wird einer Filtrierung unterworfen und das Filtrat abgezogen. Der Filtrationsrückstand wird dann, ggf. unter Zudosierung einer Steinkohle oder eines ähnlichen kohlenstoffhaltigen verkokbaren Materials, mit einem Gehalt an flüchtigen Bestandteilen von mehr als 25% (waf) einer Wirbelschichtverkokung unter Schockerhitzung, d. h. mit mindestens 1000°C/min auf Temperaturen von 500 bis 1200°C unterworfen. Dabei kann am Fuße des Reaktors ein Grobkornanteil von im wesentlichen größer als 0,3 mm ausgetragen werden, indem die Wirbelschichtbedingungen nach dem Fachmann bekannten Kriterien ausgewählt werden. Am Kopf des Wirbelschichtreaktors verlassen dann alle kleineren Körner den Reaktor und werden in einer nachgeschalteten Stufe zur Mittelkornfraktionabscheidung überführt. Hier wird eine Kornfraktion zwischen 0,05 und 0,3 mm

3

0 034 305

abgeschieden und der Einspeiseleitung für die zu filtrierende Substanz in den Filtrierapparat aufgegeben. Die übrigen Produkte aus der Wirbelschicht werden einer Abscheidung für Feinkorn zugeführt, welches zusammen mit dem Grobkorn einer thermischen Zersetzungsstufe wie Verbrennung oder Vergasung zugeführt wird. Das abgeschiedene Öl und Gas kann in der beschriebenen Weise ebenfalls weiterverarbeitet werden.

Beispiele

1. a) Die in einem Kohleverflüssigungsprozeß nach dem SRC-I-Verfahren (Solvent Refind Coal) bei 430°C und 140 bar unter ca. 3% Wasserstoffzugabe bezogen auf die Einsatzkohle (Zusammensetzung der Kohle 84% Asche, 37% flüchtige Bestandteile) gewonnenen Produkte (Kohleöl mit 7 Gew.-% in Chinolin unlöslichen Bestandteilen) werden zunächst mit einem Zusatz von 5 Gew.-% Filterhilfsmittel, bestehend aus einem Blähkoks mit 6,8 Gew.-% Asche und einer Korngrößenverteilung von 24% kleiner als 0,05 mm und 20% größer als 0,3 mm, versetzt und über ein Spaltfilter mit einer Spaltbreite von 0,1 mm bei 200°C unter einem Druck von 5 bar filtriert. Die Fläche des Spaltfilters beträgt dabei 0,2 m$^2$ und es wird eine durchschnittliche Filterleistung von 308 l Filtrat/m$^2$ Filterfläche und Stunde und einer Reinheit von 0,025% an in Chinolin unlöslichen Bestandteilen erzielt. Die Filtration wurde zur Entfernung des Filterkuchens unterbrochen, nachdem der Spaltfilter mit etwa 12 kg Filterhilfsmittel/m$^2$ Filterfläche beladen war.
Das eingesetzte Filterhilfsmittel, das notwendig ist, um das erfindungsgemäße Verfahren erst einmal in Gang zu setzen, war dadurch erzeugt worden, daß die obengenannte Kohle zu einer Körnung von etwa 0,5 mm zerkleinert worden war und mit 1000°C/min in einem üblichen hier zur Verfügung stehenden Wirbelschichtreaktor auf 800°C schockerhitzt wurde; nachdem eine ausreichende Menge des so hergestellten Blähkokses erzeugt war wurde von diesem durch Abscheidung mittels Zyklonen die Kornfraktion von im wesentlichen 0,05 mm bis 0,3 mm abgetrennt und als Filterhilfsmittel für das Anlaufen des erfindungsgemäßen Prozesses eingesetzt. Dabei betrug das Schüttgewicht 420 kg/m$^3$.
Der gewonnene Filtrationsrückstand war weich und klebrig und hatte einen Restölgehalt von 70% bei einer Temperatur 200°C. Nach einer Heißdampfanwendung (300°C) von etwa 12,5 kg Dampf/m$^2$ Filterfläche sank der Restölgehalt im Filterkuchen auf 30 Gew.-%. Die Konsistenz war nach dem Austragen aus dem Filtergehäuse bei etwa 100°C trocken und leicht krümelig.

b) Der Schritt a) gewonnene Filterkuchen wurde in einem üblichen Extruder granuliert auf eine Körnung von etwa 0,5 mm zerkleinert und mit einer Menge von 10 kg/h in einen üblichen Wirbelschichtreaktor eindosiert, der mit heißen Brenngasen einer Temperatur von 1100°C und bei einer Wirbelgasgeschwindigkeit von 0,2 m/s mit so viel Wirbelgas betrieben wurde daß sich eine Aufheizrate der Körner von 1000°C/min ergab.

c) Über mehrere nachgeschaltete Zyklone wurde der gesamte Feststoff aus dem Wirbelschichtreaktor in 3 Kornfraktionen zerlegt, von denen die mittlere eine Körnung zwischen im wesentlichen 0,05 und 0,3 mm aufwies. Korngrößenverteilung:

15% > 0,3 mm
55% > 0,1 mm
80% > 0,05 mm

Nachdem auf diese Weise eine ausreichende Menge der fraglichen Kornfraktion hergestellt worden war, wurde diese entsprechend dem Verfahrensschritt a) nunmehr als Filterhilfsmittel anstelle des ursprünglich eingesetzten Blähkokses eingesetzt. Aus dem daraus entstehenden Filterkuchen wurde sodann wieder nach den Schritten b) und c) Filterhilfsmittel erzeugt, das zur erneuten Filtrierung eingesetzt wurde.

2. Bei sonst identischer Versuchsführung wie in Beispiel 1, wurde dem getrockneten und zerkleinerten Filtrationsrückstand vor der thermischen Behandlung eine auf eine Körnung von etwa 0,5 mm aufgemahlene Steinkohle (gemäß Beispiel 1) in einer Menge von 38 Gew.-% (bezogen auf den mit Inertgas behandelten Filtrationsrückstand) zugegeben und mit ihm gemeinsam der thermischen Behandlung den weiteren Verfahrensschritten zugeführt.
Die Eigenschaften und Leistungen des so gewonnenen Filterhilfsmittel zeigen keine wesentlichen Unterschiede zu dem gemäß Beispiel 1 gewonnenen Filterhilfsmittel. Lediglich änderte sich ein wenig der Aschegehalt und die mengenmäßige Zusammensetzung der 3 erhaltenen Kornfraktionen und es war ständig ein gewisser Überschuß an rückgewonnenem Filterhilfsmittel vorhanden.

Die nachfolgende Tabelle gibt die Daten für die ersten drei Zyklen bezüglich der Filtration gemäß Beispiel 2. Die Tabelle zeigt, daß die Filtrationsdaten bei Einsatz von Filterhilfsmitteln die aus

4

Filtrationsrückständen in der erfindungsgemäßen Art rückgewonnen wurden, weitgehend ähnlich den herkömmlichen Filterhilfsmitteln, wie Kieselgur oder Perliten sind.

| Nr. | Filterhilfsmittel (= FHM) | Filtration | | | | Aufarbeitung zu FHM | | | | | |
|---|---|---|---|---|---|---|---|---|---|---|---|
| | | Durchschnittliche Filtrationsleistung l/m²h | Zusammensetzung Filterkuchen | | | Zudosierung von Kohle | Zusammensetzung des Produktes | | | | |
| | | | | | | | Fraktion 0,05–0,3 mm | | Fraktion <0,05; >0,3 | | Öl + Gas |
| | | | Rest-öl | Asche | FHM af | | Anteil | Asche | Anteil | Asche | |
| 1 | Blähkoks; 6,8% Asche | 308 | 30 | 28 | 42 | 38 | 42 | 11,4% | 87 | 31,5% | 9 |
| 2 | FHM aus Nr. 1; 11,4% Asche | 290 | 30 | 30,7 | 39,3 | 39 | 42 | 11,1% | 85 | 33,2% | 12 |
| 3 | FHM aus Nr. 2; 11,1% Asche | 305 | 30 | 30,4 | 39,6 | 39,3 | 42 | 11,1% | 84,5 | 33% | 12,5 |

FHM = Filterhilfsmittel.
af = aschefrei
Mengen sind bezogen auf Filterkuchen = 100 Teile.


## Vergleichsbeispiel

Ein Kohleverflüssigungsprodukt wie in Beispiel 1 und 2 verwendet wurde mit 5 Gew.-% eines Filterhilfsmittels auf Perlitebasis unter den gleichen Bedingungen wie in den erfindungsgemäßen Beispielen filtriert.


## Spezifizierung des Filterhilfsmittels

75,0% $SiO_2$      100 g/l Schüttgewicht
13,5% $Al_2O_3$
Rest an der Oxide
Korngrößenverteilung:
      99% > 0,1 mm
      93% > 0,05 mm
    100% > 0,3 mm

Eine Aufbereitung und Rückführung des dabei gewonnenen Filtrationsrückstandes nach dem erfindungsgemäßen Verfahren war nicht möglich, so daß der Filtrationsrückstand nur verbrannt werden konnte. Die Filtrationsleistung betrug in diesem Fall im Durchschnitt 333 l/m² h.


## Patentansprüche

1. Verfahren zur Aufbereitung und Rückführung des Filtrationsrückstandes bei der Filtration von Teeren, Pechen sowie Kohleextrakten bzw. Kohleölen mittels Filterhilfsmitteln, dadurch gekennzeichnet, daß

a)  der Filtrationsrückstand in Form eines Filterkuchens mit einem Inertgas in an sich bekannter Weise bis zur Zerkleinerbarkeit zu einem Schüttgut durchspült,
b)  anschließend auf eine Körnung von etwa 0,5 mm zerkleinert und
c)  in einer Wirbelschicht mit mindestens 1000°C/min auf eine Temperatur von 500 bis 1200°C aufgeheizt wird,
d)  nachfolgend eine Kornfraktion von 0,05 bis 0,3 mm ausselektiert und
e)  als Filterhilfsmittel dem Filtrationsprozeß in an sich bekannter Weise wieder zugeführt wird.

2. Verfahren nach Anspruch 1, dadurch gekennzeichnet, daß die gröbere und die feinere Kornfraktion aus der thermischen Behandlungsstufe des Filtrationsrückstandes thermisch zersetzt wird.

3. Verfahren nach Anspruch 1 oder 2, dadurch gekennzeichnet, daß die beim Aufheizen in der Wirbelschicht freiwerdenden flüssigen und gasförmigen Produkte thermisch zersetzt werden.

4. Verfahren nach einem oder mehreren der Ansprüche 1 bis 3, dadurch gekennzeichnet, daß vor dem Aufheizen in der Wirbelschicht dem zerkleinerten Filtrationsrückstand 20 bis 45 Gew.-% eines verkokbaren kohlenstoffhaltiges Material mit einem Gehalt an flüchtigen Bestandteilen von mehr als 25%, bezogen auf wasser- und aschefreie Kohle=waf, und etwa der gleichen Körnung wie der zerkleinerte Filtrationsrückstand zugemischt wird.

## Claims

1. A method of treating and recycling the filtration residue during the filtration of tars, pitches, and coal extracts or coal oils with the help of filter aids, characterised in that

(a) the filtration residue in the form of a filter cake is rinsed with an inert gas in a manner known per se until it is comminuted to a loose material,
(b) is subsequently comminuted to a grain size of approximately 0.5 mm, and
(c) is heated to a temperature of between 500 and 1200° C in a fluidised bed at at least 1000° C/min,
(d) after which a grain fraction of 0.05 to 0.3 mm is selected and
(e) returned in a manner known per se as a filter aid to the filtration operation.

2. A method according to claim 1, characterised in that the coarser and the finer grain fractions from the thermal treatment stage of the filtration residue are thermally decomposed.

3. A method according to claim 1 or 2, characterised in that released fluid and gaseous products are thermally decomposed during heating in the fluidised bed.

4. A method according to one or more of claims 1 to 3, characterised in that, before heating in the fluidised bed, 20 to 45% by weight of a coking carboniferous material having a content of more than 25% volatile components, with respect to water and ash-free coal = waf, and approximately the same grain size as the comminated filtration residue is added to the comminuted filtration residue.

## Revendications

1. Procédé pour le traitement et la récupération du résidu de filtration dans la filtration de goudrons, de brais, ainsi que d'extraits de charbon ou d'huiles de houille, au moyen d'adjuvants de filtration, caractérisé en ce que:

a) on balaie le résidu de filtration sous forme d'un gâteau de filtre avec un gaz inerte, d'une manière connue en soi, jusqu'à l'obtention d'un produit en vrac broyable,
b) puis on réduit à une granulométrie d'environ 0,5 mm et
c) on chauffe dans un lit fluidisé avec une élévation de température d'au moins 1000° C/mn, à une température de 500 à 1200° C,
d) on sélectionne ensuite une fraction granulométrique de 0,05 à 0,3 mm, et
e) on l'ajoute en tant qu'adjuvant de filtration dans le procédé de filtration d'une manière connue en soi.

2. Procédé selon la revendication 1, caractérisé en ce que la fraction de grains plus grossiers et la fraction de grains plus fins, provenant de l'opération de traitement thermique du résidu de filtration, sont décomposées thermiquement.

3. Procédé selon la revendication 1 ou 2, caractérisé en ce que les produits liquides et gazeux libérés lors du chauffage en lit fluidisé sont décomposés thermiquement.

4. Procédé selon l'une quelconque ou plusieurs des revendications 1 à 3, caractérisé en ce qu'avant le chauffage dans le lit fluidisé, on ajoute au résidu de filtration broyé de 20 à 45% en poids d'une matière contenant du charbon, cokéfiable, avec une teneur en constituants volatils supérieure à 25%, calculée par rapport au charbon exempt d'eau et de cendres (waf), et avec à peu près la même granulométrie que le résidu de filtration broyé.

Rückführung Kreislauföl

Rückführung Filterhilfsmittel

Kohle

| SRC-Prozeß | | Filter | | Wirbelschicht | | Abscheidung Mittelkorn | | Abscheidung Feinkorn |

SRC-Produkt (roh)

Filtrier-rückstand

Kohle

Abscheidung Öl

SRC-Produkt Filtrat

Dampf

Weitere Aufarbeitung

Grobkorn Koks

Vergasung

Feinkorn Koks

Brenngas

Inertgas für Wirbelbett

Erzeugung Prozeßwärme

Wasserstoff

Gasaufarbeitung

Asche

CO/CO₂

Fig.1

0 034 305